# FASCICULE DE BREVET EUROPEEN

(11) **EP 1 929 777 B1**
(45) Date de publication et mention de la délivrance du brevet: **10.11.2010**
(21) Numéro de dépôt: 06808288.2
(22) Date de dépôt: 07.09.2006
(51) Int. Cl.: H04N 7/14

(54) **SYSTEME ET PROCEDE DE TRAITEMENT D'IMAGES PAR ANNULATION D'ECHO VIDEO**
SYSTEM UND VERFAHREN ZUM VERARBEITEN VON BILDERN DURCH VISUELLE ECHOLÖSCHUNG
SYSTEM AND METHOD FOR PROCESSING IMAGES BY VISUAL ECHO CANCELLATION

(30) Priorité: 08.09.2005 FR 0509152
(43) Date de publication de la demande: 11.06.2008
(73) Titulaire: FRANCE TELECOM, 75015 Paris (FR)
(72) Inventeur: GACHIGNARD, Olivier, F-92120 Montrouge (FR)
(74) Mandataire: Delumeau, François Guy
(86) Numéro de dépôt international: PCT/FR2006/050850
(87) Numéro de publication internationale: WO 2007/028928

(56) Documents cités:
- EP-A- 0 586 198
- WO-A-03/077095
- FR-A- 2 858 431
- US-A- 5 400 069
- US-A- 5 666 155

## Description

### Arrière-plan de Invention

La présente invention se rapporte au domaine général du traitement d'images, et plus particulièrement aux installations de communications interpersonnelles par échange d'images vidéo telles que les systèmes de visioconférence.

De façon connue, les systèmes de visioconférence comportent un dispositif de projection adapté à former des images sur un écran à partir d'un flux vidéo reçu en provenance d'un site distant, et un dispositif d'acquisition (typiquement une caméra) adapté à effectuer des prises de vue d'une zone d'observation pour générer un flux à transmettre au site distant.

Dans les systèmes audiovisuels de communications interpersonnelles, les utilisateurs sont à la fois l'objet d'une prise de vue au moyen de la caméra et les observateurs d'un écran sur lequel s'affiche l'image de leur correspondant distant.

Dans certains systèmes, la caméra est placée à côté ou au-dessus de l'écran.

Un tel angle de prise de vue conduit à une vue de biais ou plongeante qui n'est pas naturelle. En outre, comme les utilisateurs regardent l'écran et non pas la caméra, leurs correspondants ont l'impression qu'ils ne regardent pas leur visage comme ils le feraient dans une conversation normale face à face.

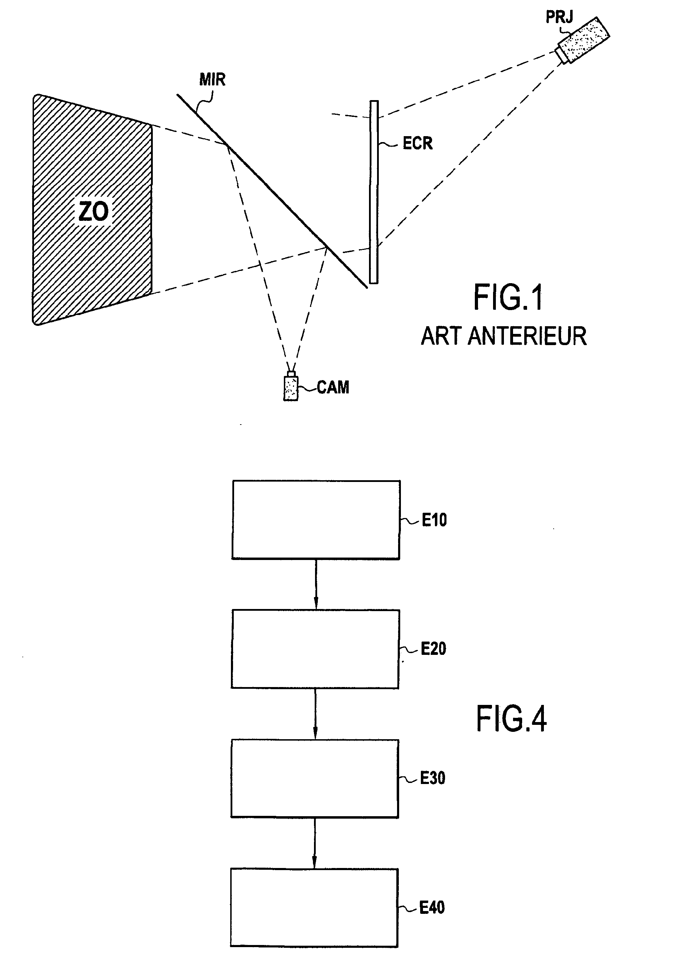

Pour remédier à cet inconvénient, il est connu d'utiliser, selon un montage illustré à la **figure 1**, un miroir MIR partiellement transparent placé obliquement devant l'écran ECR et renvoyant vers la caméra CAM l'image des observateurs placés dans la zone d'observation ZO.

La position virtuelle de la caméra CAM peut ainsi être placée au milieu de l'écran ECR ou derrière lui, là où s'affiche le visage d'un correspondant distant.

Ce système présente cependant plusieurs inconvénients liés notamment à l'encombrement et au poids du miroir oblique MIR, ce miroir imposant au surplus une distance minimale entre les observateurs et l'écran ECR.

Par ailleurs, la zone qui se trouve derrière le miroir par rapport à la caméra (au-dessus du miroir MIR sur la figure 1) étant dans le champ de la caméra à travers le miroir, son image vient se superposer à l'image des utilisateurs, ce qui introduit des artefacts gênants.

D'autres artefacts sont dus aux reflets sur le miroir MIR qui se superposent aussi à l'image affichée sur l'écran ECR.

Le document US-A-5 400 069 décrit un système de vidéoconférence comportant un dispositif de projection des images reçues d'un site distant sur un écran et une caméra placée derrière l'écran et en face de l'utilisateur adaptée à effectuer des prises de vue de celui-ci. Pour éviter que la caméra prenne des images reçues superposées à celles de l'utilisateur, l'écran devient simultanément transparent par rapport à la caméra et translucide par rapport au projecteur.

### Objet et résumé de l'invention

Dans ce contexte, l'invention a pour but de permettre de placer librement une caméra derrière l'écran tout en se libérant des inconvénients et des contraintes mentionnés ci-dessus.

A cet effet, l'invention vise un système de traitement d'images comportant :
- un dispositif de projection d'un premier flux lumineux provenant d'un signal vidéo généré à partir d'un flux entrant reçu par des moyens de réception pour former une première image sur un écran, sur lequel un deuxième flux lumineux en provenance d'une zone d'observation, forme une deuxième image ; et
- un dispositif d'acquisition d'une troisième image formée sur cet écran et correspondant à la superposition de cette deuxième image et d'au moins une partie de la première image ;

Ce système comporte des moyens de contrôle adaptés à :
- obtenir un premier signal représentatif de la partie précitée de la première image ;
- obtenir un deuxième signal représentatif de la troisième image ; et
- calculer un troisième signal en soustrayant au moins partiellement le premier signal du deuxième signal pour former une image représentative de la zone d'observation.

Le principe général de l'invention est donc de soustraire en temps réel le flux vidéo reçu du site distant destiné à être projeté sur l'écran, des prises de vue acquises par le dispositif d'acquisition. En pratique, il s'agit de réaliser une adaptation de niveau entre le signal sortant de la caméra et celui prélevé en entrée du dispositif de projection.

Préférentiellement, les moyens de contrôle sont adaptés à multiplier le premier signal par un coefficient de pondération et à soustraire le signal résultant de cette multiplication du deuxième signal pour obtenir le troisième signal.

Préférentiellement, le système de traitement d'images selon l'invention comporte un capteur de luminosité adapté à obtenir le coefficient de pondération en fonction de la luminosité.

Cette caractéristique permet avantageusement de réaliser un filtrage adaptatif corrigeant en temps réel les variations de luminosité. Plus particulièrement, si la luminosité de la zone d'observation augmente (respectivement diminue), la caméra doit être moins (respectivement plus) alimentée en lumière, mais le flux vidéo issu du vidéoprojecteur doit être plus (respectivement moins) lumineux afin que l'utilisateur ait une meilleure perception.

Le coefficient de pondération est compris entre 0 et 1. Dans un environnement lumineux contrôlé (pièce aveugle), il peut être choisi égal à 0,5.

Si la lumière du jour est présente dans la pièce, ce coefficient de pondération pourra être diminué, par exemple égal à 0,4.

Au contraire, si la pièce devient plus sombre à cause d'un élément d'éclairage défectueux par exemple, le coefficient de pondération sera augmenté, par exemple égal à 0,7.

Dans un mode préféré de réalisation, le dispositif de projection du système de traitement d'images selon l'invention comporte un projecteur relié à un système informatique par une liaison électrique véhiculant des signaux représentatifs de la première image, et un élément de dérivation sans perte des signaux agencé sur la liaison, adapté à dupliquer les signaux pour former le premier signal.

Dans un mode préféré de réalisation, le système de traitement d'images selon l'invention comporte des moyens de conversion du premier signal et/ou du deuxième signal dans un format adapté au calcul du troisième signal.

Par exemple, dans une réalisation particulière, la caméra est adaptée à générer un deuxième signal au format vidéo, ce deuxième signal étant converti en format RGB avant soustraction du premier signal obtenu en entrée du projecteur, ce premier signal étant lui aussi dans ce mode particulier au format RGB.

Préférentiellement, le système de traitement d'images selon l'invention comporte des moyens de transmission du troisième signal vers un dispositif distant, par exemple pour une application de visioconférence.

Corrélativement, l'invention concerne un procédé de traitement d'images pouvant être mis en oeuvre dans un système de traitement d'images comportant :
- un dispositif de projection d'un premier flux lumineux provenant d'un signal vidéo généré à partir d'un flux entrant reçu par des moyens de réception, pour former une première image sur un écran, sur lequel un deuxième flux lumineux en provenance d'une zone d'observation, forme une deuxième image ; et
- un dispositif d'acquisition d'une troisième image formée sur l'écran et correspondant à la superposition de la deuxième image et d'au moins une partie de la première image ; les première image et troisième image étant mémorisées dans un système informatique sous forme de fichiers.

Ce procédé comporte :
- une étape de lecture de premières données numériques représentatives de la partie de la première image à partir du fichier mémorisant la première image ;
- une étape de lecture de deuxièmes données numériques représentatives de la troisième image à partir du fichier mémorisant la troisième image ; et
- une étape de calcul de troisièmes données numériques obtenues en soustrayant au moins partiellement les premières des deuxièmes données numériques pour former une image représentative de la zone d'observation.

Selon une implémentation préférée, les différentes étapes du procédé de traitement d'images sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes du procédé de traitement d'images mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est un schéma illustrant une installation de l'art antérieur ;
- la figure 2 représente un dispositif de traitement d'images conforme à l'invention dans une première variante de réalisation ;
- la figure 3 représente un dispositif de traitement d'images dans une deuxième variante de réalisation ; et
- la figure 4 représente sous forme d'organigramme les principales étapes d'un procédé de traitement d'images conforme à l'invention dans un mode préféré de réalisation.

### Description détaillée d'un mode de réalisation

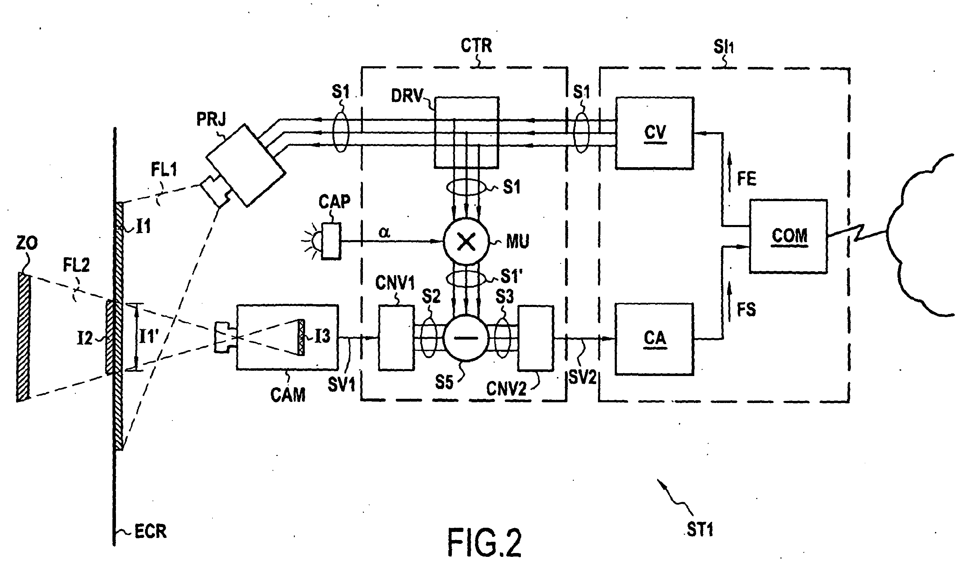

La **figure 2** représente un système de traitement d'images ST1 conforme à l'invention dans une première variante de réalisation.

Ce système comporte un écran ECR sur lequel un projecteur PRJ projette un premier flux lumineux FL1 pour former sur cet écran une première image I1.

Cette image I1 est une image vidéo provenant d'un flux entrant FE reçu par une carte de communication COM d'un système information SI₁ en provenance d'un site distant non représenté.

De façon connue, ce flux entrant FE est traité par une carte vidéo CV intégrée à ce système informatique SI₁, la carte vidéo CV générant un signal S1 à trois composantes R, G, B, ces trois composantes étant fournies en entrée du projecteur PRJ.

Le système de traitement d'image ST1 comporte également un dispositif d'acquisition constitué principalement par une caméra CAM et d'une carte d'acquisition CA intégrée au système informatique SI₁.

Le flux sortant FS de la carte d'acquisition CA est transmis au site distant par la carte de communication COM.

La caméra CAM et le projecteur PRJ sont situés du même côté d'un demi-plan délimité par l'écran ECR.

La caméra CAM effectue des prises de vue d'une zone d'observation ZO située de l'autre côté de l'écran ECR.

Autrement dit, la zone d'observation ZO produit, sur l'écran ECR, une deuxième image 12, cette deuxième image 12 se superposant avec une partie I1' de la première image I1 formée par le projecteur PRJ.

L'homme du métier comprendra que la caméra CAM acquiert en réalité une troisième image I3 formée sur l'écran ECR et correspondant à la superposition de la deuxième image I2 et de la partie I1' de la première image I1.

Dans le mode de réalisation décrit ici, le signal SV1 en sortie de la caméra CAM correspondant aux images I3 successives est conforme au standard S vidéo.

Dans le mode préféré de réalisation décrit ici, le système de traitement d'image ST1 selon l'invention comporte un capteur de luminosité CAP adapté à fournir un coefficient de pondération α compris entre 0 et 1 en fonction de la luminosité, ce coefficient de pondération étant plus proche de 1 lorsque l'environnement s'assombrit.

Dans cette première variante de réalisation, le système de traitement d'images ST1 comporte un contrôleur CTR agencé entre le système informatique SI1 d'une part et le projecteur PRJ et la caméra CAM d'autre part.

Ce contrôleur CTR comporte un élément DRV de dérivation sans perte qui reçoit en entrée le signal S1 à composantes RGB issu de la carté vidéo CV du système informatique SI1, et transmet ce signal S1 au projecteur PRJ comme décrit précédemment.

Cet élément DRV de dérivation sans perte est adapté également à dupliquer ce signal S1 et à le rediriger vers un multiplicateur MU qui reçoit, sur une autre entrée, le coefficient de pondération a en provenance du capteur de luminosité CAP.

Ce multiplicateur MU est ainsi adapté à fournir en sortie un signal S1' à composantes RGB, chacune des composantes étant obtenue en multipliant la composante correspondante du signal S1 par le coefficient de pondération α.

Le contrôleur CTR comporte également des moyens de conversion CNV1 adaptés à recevoir en entrée le signal SV₁ au format S-vidéo fourni par la caméra CAM et à convertir ce signal S-vidéo en un deuxième signal S2 à composantes RGB.

Le contrôleur CTR comporte un soustracteur SS dont une première entrée reçoit le signal S2 en sortie des moyens de conversion CNV1 et une deuxième entrée, le signal en sortie du multiplicateur MU.

Ce soustracteur SS est adapté à fournir en sortie un troisième signal S3 en soustrayant le signal reçu sur sa deuxième entrée du signal S2 reçu sur sa première entrée.

Ce troisième signal S3 est représentatif d"une image 12' de la zone d'observation SO. Il est fourni en entrée d'un deuxième convertisseur CNV2 qui convertit le signal S3 à composantes RGB en un signal SV₂ conforme au standard S-vidéo.

Le signal SV₂ est fourni en entrée de la carte d'acquisition CA du système informatique SI₁ pour être transmis via la carte de communication COM au site distant.

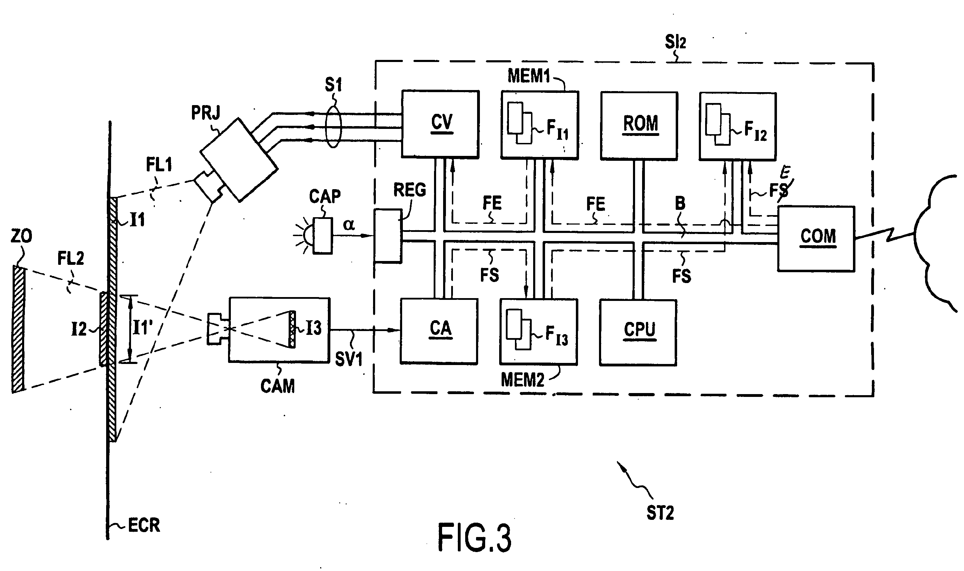

La **figure 3** représente un système de traitement d'images conforme à l'invention dans une deuxième variante de réalisation.

Les éléments de cette figure communs avec les éléments de la figure 2 portent les mêmes références.

Le système de traitement d'images ST2 comporte un système informatique SI1 comprenant des éléments reliés par un bus B parmi lesquels la carte vidéo CV, la carte d'acquisition CA et la carte de communication COM déjà décrites.

Sur ce bus B se trouve un registre REG adapté à mémoriser la valeur du coefficient de pondération α fourni par le capteur de luminosité CAP.

Le système informatique SI2 décrit ici est construit sur la base d'un ordinateur. Il comporte un processeur CPU et une mémoire morte ROM comportant un programme d'ordinateur adapté à mettre en oeuvre les étapes du procédé de traitement d'images conforme à l'invention représenté sous forme d'organigramme à la **figure 4**.

Le système informatique SI2 comporte également une mémoire vive RAM pour mémoriser les variables temporaires nécessaires à l'exécution de ce programme informatique par le processeur CPU.

Dans le mode préféré de réalisation décrit ici, le flux FE entrant reçu par la carte de communication COM est tamponné dans une mémoire à accès rapide MEM1 accessible par la carte vidéo CV.

De même, le flux sortant FS généré par la carte d'acquisition CA est mémorisé dans une mémoire à accès rapide MEM2.

On supposera ici que chaque image I1 du flux entrant FE est mémorisée dans la mémoire à accès rapide MEM1 sous forme d'un fichier informatique F₁₁, et que chaque image en sortie de la carte d'acquisition CA est mémorisée dans la mémoire vive à accès rapide MEM2 sous la forme d'un fichier numérique F_{I3}.

Nous appellerons DN1 les premières données numériques représentatives de la partie I1' de la première image I1 qui se chevauche sur l'écran ECR avec la deuxième image I2.

Nous appellerons DN2 les deuxièmes données numériques représentatives de la troisième image I3 acquise par la caméra CAM.

Nous supposerons que lorsque la carte d'acquisition CA enregistre dans la mémoire à accès rapide MEM2 un fichier F_{I3} correspondant à une image I3 acquise par la caméra CAM, cette carte d'acquisition génère un signal, non représenté ici, vers le processeur CPU.

Sur réception de ce signal, le processeur effectue une première étape E10 au cours de laquelle il lit les premières données numériques DN1 représentatives de la partie I1' de la première image I1, à partir du fichier F_{I1}, projetée sur l'écran ECR au moment de l'acquisition de l'image I3 par la caméra CAM.

Cette étape E10 est suivie par une deuxième étape de lecture E20 au cours de laquelle le processeur CPU obtient par lecture du fichier F_{I3} mémorisant l'image I3 les deuxièmes données numériques DN2 précitées.

Cette deuxième étape de lecture D20 est suivie par l'étape E30 au cours de laquelle le processeur CPU lit la valeur du coefficient de pondération α à partir du registre REG.

Cette étape de lecture est suivie par une étape au cours de laquelle le processeur CPU calcule des troisièmes données numériques obtenues en soustrayant aux deuxièmes données numériques DN2 le produit des premières données numériques DN1 par le coefficient de pondération α.

Ces troisièmes données numériques DN3 sont mémorisées sous forme d'un fichier F_{I2} dans la mémoire vive RAM, ce fichier représentant une image I2' représentative de la zone d'observation ZO.

Ces différents fichiers informatiques F_{I2} permettent de constituer le flux vidéo sortant FS transmis au site distant.

## Revendications

1. Système de traitement d'images-comportant :
- un dispositif de projection (PRJ, SI₁) d'un premier flux lumineux (FL1) provenant d'un signal vidéo (S1) généré à partir d'un flux entrant (FE) reçu par des moyens (COM) de réception pour former une première image (I1) sur un écran (ECR), sur lequel un deuxième flux lumineux (FL2), en provenance d'une zone d'observation (ZO), forme une deuxième image (I2) ; et
- un dispositif d'acquisition (CAM, SI₁) d'une troisième image (I3) formée sur ledit écran (ECR) et correspondant à la superposition de ladite deuxième image (I2) et d'au moins une partie (I1') de ladite première Image (I1) ;
ledit système étant **caractérise en ce qu'**il comporte des moyens de contrôle (CTR) adaptés à :
- obtenir un premier signal (S1) représentatif de ladite partie (I1') de la première image (I1) ;
- obtenir un deuxième signal (S2) représentatif de ladite troisième image (I3) ; et
- calculer un troisième signal (53) en soustrayant
ledit premier signal (S1) dudit deuxième (S2) signal pour former une image (I2') représentative de ladite zone d'observation (ZO).

2. Système selon la revendication 1, **caractérisé en ce que** lesdits moyens de contrôle (CTR) sont adaptés à multiplier ledit premier signal (S1) par un coefficient (α) de pondération et à soustraire le signal résultant de ladite multiplication dudit deuxième signal (S2) pour obtenir ledit troisième signal (S3).

3. Système selon la revendication 2, **caractérisé en ce qu'**il comporte un capteur (CAP) de luminosité adapté à fournir ledit coefficient de pondération (α) en fonction de ladite luminosité.

4. Système selon l'une quelconque des revendications 1 à 3, **caractérisé en ce que** ledit dispositif de projection (PRJ, SI₁) comporte un projecteur (PRJ) relié à un système informatique (SI₁) par une liaison électrique véhiculant des signaux (R, G, B) représentatifs de ladite première image (I1), et un élément (DRV) de dérivation sans perte agencé sur ladite liaison, adapté à dupliquer ledit premier signal (S1).

5. Système selon l'une quelconque des revendications 1 à 4
**caractérisé en ce qu'**il comporte des moyens de conversion (CNV1) dudit deuxième signal (S2) dans un format adapté au calcul dudit troisième signal (S3).

6. Système selon l'une quelconque des revendications 1 à 5, **caractérisé en ce qu'**il comporte des moyens (COM) de transmission dudit troisième signal (S3) vers un dispositif disant.

7. Procédé de traitement d'images pouvant être mis en oeuvre dans un système de traitement d'images, comportant :
- un dispositif de projection (PRJ, SI₂) d'un premier flux lumineux (FL1) provenant d'un signal vidéo (S1) généré à partir d'un flux entrant (FE) reçu par des moyens (COM) de réception, pour former une première image (I1) sur un écran (ECR), sur lequel un deuxième flux lumineux (FL2), en provenance d'une zone d'observation (ZO), forme une deuxième image (I2) ; et
- un dispositif d'acquisition (CAM, SI₂) d'une troisième image (I3) formée sur ledit écran (ECR) et correspondant à la superposition de ladite deuxième image (I2) et d'au moins une partie (I1') de ladite première image (I1) ;
lesdites première image (I1) et troisième image (I3) étant mémorisées dans un système informatique (SI₂) sous forme de fichiers (F_{I1}, F_{I3}), ledit procédé étant **caractérisé en ce qu'**il comporte :
- une étape (E10) de lecture de premières données numériques (DN1) représentatives de ladite partie (I1') de la première image (I1) à partir dudit fichier (F_{I1}) mémorisant ladite première image (I1) ;
- une étape (E20) de lecture de deuxièmes données numériques (DN2) représentatives de la troisième image (I3) à partir dudit fichier (F_{I3}) mémorisant ladite troisième image (I3) ; et
- une étape (E40) de calcul de troisièmes données numériques (DN3) obtenues en soustrayant, lesdites premières (DN1) desdites deuxièmes données numériques (DN2) pour former une image (I2') représentative de ladite zone d'observation (ZO), ces troisièmes données numériques (DN3) étant mémorisées sous forme d'un fichier F_{I2}.

8. Programme d'ordinateur comportant des instructions pour l'exécution des étapes du procédé de traitement d images selon la revendication 7 lorsque ledit programme est exécuté par un ordinateur.

9. Support d'enregistrement lisible par un ordinateur sur lequel est enregistré un programme d'ordinateur comprenant des instructions pour l'exécution des étapes du procédé de traitement d'images selon la revendication 7.

## Claims

1. System for processing images comprising:
- a projection device (PRJ, SI₁) for projecting a first luminous stream (FL1) originating from a video signal (S1) generated from an incoming stream (FE) received by reception means (COM) so as to form a first image (I1) on a screen (ECR), on which a second luminous stream (FL2), originating from an observation zone (ZO), forms a second image (12); and
- an acquisition device (CAM, SI₁) for acquiring a third image (13) formed on the said screen (ECR) and corresponding to the superposition of the said second image (12) and of at least one part (I1') of the said first image (I1) ;
the said system being **characterized in that** it comprises control means (CTR) adapted for:
- obtaining a first signal (S1) representative of the said part (I1') of the first image (I1) ;
- obtaining a second signal (S2) representative of the said third image (13); and
- calculating a third signal (S3) by subtracting the said first signal (S1) from the said second signal (S2) so as to form an image (12') representative of the said observation zone (ZO).

2. System according to Claim 1, **characterized in that** the said control means (CTR) are adapted for multiplying the said first signal (S1) by a weighting coefficient (α) and for subtracting the signal resulting from the said multiplication from the said second signal (S2) so as to obtain the said third signal (S3).

3. System according to Claim 2, **characterized in that** it comprises a brightness sensor (CAP) adapted for providing the said weighting coefficient (α) as a function of the said brightness.

4. System according to any one of Claims 1 to 3, **characterized in that** the said projection device (PRJ, SI₁) comprises a projector (PRJ) linked to a computerized system (SI₁) by an electrical link conveying signals (R, G, B) representative of the said first image (I1), and a lossless bypass element (DRV) arranged on the said link, adapted for duplicating the said first signal (S1).

5. System according to any one of Claims 1 to 4, **characterized in that** it comprises conversion means (CNV1) for converting the said second signal (S2) into a format adapted for the calculation of the said third signal (S3).

6. System according to any one of Claims 1 to 5, **characterized in that** it comprises means (COM) for transmitting the said third signal (S3) to a remote device.

7. Method for processing images that can be implemented in a system for processing images comprising:
- a projection device (PRJ, SI₂) for projecting a first luminous stream (FL1) originating from a video signal (S1) generated from an incoming stream (FE) received by reception means (COM) so as to form a first image (I1) on a screen (ECR), on which a second luminous stream (FL2), originating from an observation zone (ZO), forms a second image (I2); and
- an acquisition device (CAM, SI₂) for acquiring a third image (13) formed on the said screen (ECR) and corresponding to the superposition of the said second image (12) and of at least one part (II') of the said first image (I1) ;
the said first image (I1) and third image (13) being stored in a computerized system (SI₂) in the form of files (F_{I1}, F_{I3}), the said method being **characterized in that** it comprises:
- a step (E10) of reading first digital data (DN1) representative of the said part (I1') of the first image (I1) from the said file (F_{I1}) storing the said first image (I1);
- a step (E20) of reading second digital data (DN2) representative of the third image (13) from the said file (F_{I3}) storing the said third image (13); and
- a step (E40) of calculating third digital data (DN3) obtained by subtracting the said first (DN1) from the said second digital data (DN2) so as to form an image (12') representative of the said observation zone (ZO), these third digital data (DN3) being stored in the form of a file F_{I2}.

8. Computer program comprising instructions for executing the steps of the method for processing images according to Claim 7 when the said program is executed by a computer.

9. Recording medium readable by a computer on which is recorded a computer program comprising instructions for executing the steps of the method for processing images according to Claim 7.

## Patentansprüche

1. Bildverarbeitungssystem, wobei das System aufweist:
- eine Vorrichtung (PRJ, SI₁) zur Projektion eines ersten Lichtstroms (FL1), der von einem Videosignal (S1) kommt, das ausgehend von einem eingehenden Strom (FE) erzeugt wird, der von Empfangseinrichtungen (COM) empfangen wird, um ein erstes Bild (I1) auf einem Bildschirm (ECR) zu formen, auf dem ein von einer Beobachtungszone (ZO) kommender zweiter Lichtstrom (FL2) ein zweites Bild (12) formt; und
- eine Erfassungseinrichtung (CAM, SI₁) eines dritten Bilds (13), das auf dem Bildschirm (ECR) geformt wird und der Überlagerung des zweiten Bilds (12) und mindestens eines Teils (I1') des ersten Bilds (I1) entspricht;
wobei das System **dadurch gekennzeichnet ist, dass** es Steuereinrichtungen (CTR) aufweist, die geeignet sind, um:
- ein erstes Signal (S1) zu erhalten, das für den Teil (I1') des ersten Signals (I1) repräsentativ ist;
- ein zweites Signal (S2) zu erhalten, das für das dritte Bild (13) repräsentativ ist; und
- ein drittes Signal (S3) zu berechnen, indem das erste Signal (S1) vom zweiten Signal (S2) subtrahiert wird, um ein Bild (12') zu formen, das für die Beobachtungszone (ZO) repräsentativ ist.

2. System nach Anspruch 1, **dadurch gekennzeichnet, dass** die Steuereinrichtungen (CTR) geeignet sind, um das erste Signal (S1) mit einem Gewichtungskoeffizient (α) zu multiplizieren und das aus der Multiplikation resultierende Signal vom zweiten Signal (S2) zu subtrahieren, um das dritte Signal (S3) zu erhalten.

3. System nach Anspruch 2, **dadurch gekennzeichnet, dass** es einen Helligkeitssensor (CAP) aufweist, der geeignet ist, um den Gewichtungskoeffizient (α) in Abhängigkeit von der Helligkeit zu liefern.

4. System nach einem der Ansprüche 1 bis 3, **dadurch gekennzeichnet, dass** die Projektionsvorrichtung (PRJ, SI₁) einen Projektor (PRJ), der mit einem Datenverarbeitungssystem (SI₁) über eine elektrische Verbindung verbunden ist, die für das erste Bild (I1) repräsentative Signale (R, G, B) übermittelt, und ein verlustloses Umleitelement (DRV) aufweist, das auf der Verbindung angeordnet und geeignet ist, um das erste Signal (S1) zu duplizieren.

5. System nach einem der Ansprüche 1 bis 4, **dadurch gekennzeichnet, dass** es Umwandlungseinrichtungen (CNV1) des zweiten Signals (S2) in ein Format aufweist, das für die Berechnung des dritten Signals (S3) geeignet ist.

6. System nach einem der Ansprüche 1 bis 5, **dadurch gekennzeichnet, dass** es Übertragungseinrichtungen (COM) des dritten Signals (S3) zu einer fernen Vorrichtung aufweist.

7. Bildverarbeitungsverfahren, das in einem Bildverarbeitungssystem durchgeführt werden kann, wobei das System aufweist:
- eine Vorrichtung (PRJ, SI₂) zur Projektion eines ersten Lichtstroms (FL1), der von einem Videosignal (S1) kommt, das ausgehend von einem eingehenden Strom (FE) erzeugt wird, der von Empfangseinrichtungen (COM) empfangen wird, um ein erstes Bild (I1) auf einem Bildschirm (ECR) zu formen, auf dem ein von einer Beobachtungszone (ZO) kommender zweiter Lichtstrom (FL2) ein zweites Bild (12) formt; und
- eine Erfassungseinrichtung (CAM, SI₂) eines dritten Bilds (13), das auf dem Bildschirm (ECR) geformt wird und der Überlagerung des zweiten Bilds (12) und mindestens eines Teils (I1') des ersten Bilds (I1) entspricht;
wobei das erste Bild (I1) und das dritte Bild (13) in einem Datenverarbeitungssystem (SI₂) in Form von Dateien (F_{I1}, F_{I3}) gespeichert werden, wobei das Verfahren **dadurch gekennzeichnet ist, dass** es aufweist:
- einen Schritt (E10) des Lesens erster digitaler Daten (DN1), die für den Teil (I1') des ersten Bilds (I1) repräsentativ sind, ausgehend von der Datei (F_{I1}), die das erste Bild (I1) speichert;
- einen Schritt (E20) des Lesens zweiter digitaler Daten (DN2), die für das dritte Bild (13) repräsentativ sind, ausgehend von der Datei (F_{I3}), die das dritte Bild (I3) speichert; und
- einen Schritt (E40) der Berechnung dritter digitaler Daten (DN3), die durch Subtrahieren der ersten (DN1) von den zweiten digitalen Daten (DN2) erhalten werden, um ein Bild (12') zu formen, das für die Beobachtungszone (ZO) repräsentativ ist, wobei diese dritten digitalen Daten (DN3) in Form einer Datei F_{I2} gespeichert werden.

8. Computerprogramm, das Anweisungen für die Ausführung der Schritte des Bildverarbeitungsverfahrens nach Anspruch 7 aufweist, wenn das Programm von einem Computer ausgeführt wird.

9. Computerlesbarer Aufzeichnungsträger, auf dem ein Computerprogramm aufgezeichnet ist, das Anweisungen für die Ausführung der Schritte des Bildverarbeitungsverfahrens nach Anspruch 7 enthält.
